(19) **Europäisches Patentamt / European Patent Office / Office européen des brevets**

(11) **EP 2 843 249 B1**

(12) **EUROPEAN PATENT SPECIFICATION**

(45) Date of publication and mention of the grant of the patent:
**08.04.2020 Bulletin 2020/15**

(21) Application number: **13782483.5**

(22) Date of filing: **22.04.2013**

(51) Int Cl.:
*F16C 33/66* (2006.01)      *C10M 171/02* (2006.01)
*C21D 1/06* (2006.01)       *C21D 9/40* (2006.01)
*C22C 38/00* (2006.01)      *C22C 38/04* (2006.01)
*F16C 19/16* (2006.01)      *F16C 33/32* (2006.01)
*F16C 33/62* (2006.01)      *C10N 20/02* (2006.01)
*C10N 30/00* (2006.01)      *C10N 40/02* (2006.01)
*C10N 50/10* (2006.01)      *C22C 38/18* (2006.01)
*C23C 8/32* (2006.01)       *C22C 38/02* (2006.01)
*C10M 171/00* (2006.01)     *C23C 8/02* (2006.01)
*C23C 8/80* (2006.01)       *C21D 1/74* (2006.01)
*C21D 1/18* (2006.01)

(86) International application number:
**PCT/JP2013/061813**

(87) International publication number:
**WO 2013/161775 (31.10.2013 Gazette 2013/44)**

(54) **USE OF A ROLLING BEARING**

VERWENDUNG EINES WÄLZLAGERS

UTILISATION D'UN PALIER À ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2012   JP 2012100027**
**22.10.2012   JP 2012233165**
**08.04.2013   JP 2013080642**

(43) Date of publication of application:
**04.03.2015 Bulletin 2015/10**

(73) Proprietor: **NSK Ltd.**
**Tokyo 141-8560 (JP)**

(72) Inventors:
• **SUGITA, Yoshifumi**
**Kanagawa 251-8501 (JP)**

• **KATSUNO, Yoshiaki**
**Kanagawa 251-8501 (JP)**

(74) Representative: **Grünecker Patent- und Rechtsanwälte**
**PartG mbB**
**Leopoldstraße 4**
**80802 München (DE)**

(56) References cited:
**EP-A1- 1 715 072      EP-A1- 2 025 765**
**JP-A- 2004 353 742      JP-A- 2004 353 742**
**JP-A- 2007 154 281      JP-A- 2010 194 684**
**JP-A- 2010 194 684      US-A1- 2003 219 182**
**US-B1- 6 409 846**

**Description**

TECHNICAL FIELD

This invention relates to a use of a rolling bearing which is lubricated with lubricating oil whose kinematic viscosity at 40°C is 1 to $5\times10^{-5}m^2/s$ (10 to 50 cSt) or grease whose kinematic viscosity of base oil at 40°C is 1 to $5\times10^{-5}m^2/s$ (10 to 50 cSt) and is used on rotation condition that a PV value of rolling contact between a raceway surface of an inner ring or an outer ring and a rolling surface of a rolling element is 100 MPa·m/s or more and a Dmn value is 800000 or more.

BACKGROUND ART

A rolling bearing used in a machine tool is used in a high-speed rotation range in which a Dmn value (the product of an average dimension Dm of an inside diameter and an outside diameter of the bearing ≈ a diameter Dp (mm) of a pitch circle of a rolling element multiplied by a rotational speed n ($min^{-1}$)) exceeds 800000. Recently, the Dmn value may exceed 1000000. Further, a previous high pressure is applied in order to increase rigidity of a main spindle. With this, in the rolling bearing for the main spindle of the machine tool, a PV value (P: surface pressure (Pa), V: slip speed (m/s)) often becomes 100 MPa·m/s or more.

Also, a low-viscosity lubricant is used in order to decrease torque while reducing heat generation of the rolling bearing in use. For oil lubrication, kinematic viscosity of lubricating oil at 40°C is set at 1 to $5\times10^{-5}m^2/s$ (10 to 50 cSt), and for grease lubrication, kinematic viscosity of base oil at 40°C is set at 1 to $5\times10^{-5}m^2/s$ (10 to 50 cSt). When the kinematic viscosity is less than $1\times10^{-5}m^2/s$, an oil film is resistant to being formed and metal contact occurs on a rolling contact surface with a slip under high-speed rotation and there is a high possibility of burning. When the kinematic viscosity is more than $5\times10^{-5}m^2/s$, the oil film is well formed, but viscous resistance or stirring resistance of the oil increases the temperature of the bearing. This increases thermal displacement of the main spindle and results in insufficient machining accuracy of the machine tool.

Since the rolling bearing for the machine tool is used on condition that the PV value is high and the oil film is thin thus, the rolling bearing is used in a clean environment, but the metal contact still tends to occur on the rolling contact surface.

JP-A-2007-192330 describes a rolling bearing for supporting a main spindle of a machine tool, the rolling bearing in which lubrication performance in the case of being used under high-speed rotation is improved and in order to decrease torque and the amount of heat generation, grooves for lubricant holding are formed in a rolling surface and raceway surfaces of an inner ring and an outer ring and an oil-repellent film is formed in the grooves.

JP-A-2004-353742 describes a rolling bearing used in a high-speed rotation environment in which a Dmn value becomes $1.0\times10^6$ or more, the rolling bearing in which a PV value becomes high and sliding friction produced between a rolling element and a raceway surface increases and wear or burning occurs before reaching a rolling fatigue life. Also, as described in JP-A-2004-353742, the rolling element shall satisfy the following configurations (a) to (c) in order to well prevent the burning even for grease lubrication.

(a) A nitride precipitate containing 5% or more Si by weight is had on a surface layer part of a rolling surface, and a surface coating ratio of the nitride precipitate is 10% or more.
(b) Steel forming raw materials used contains 0.3 to 1.2% C, 0.5 to 2.0% Si, 0.2 to 2.0% Mn and 0.5 to 2.0% Cr by weight, and contains 0.05 to 0.2% one or more kind of Mo, V and Nb in total by weight, and includes residues having Fe and inevitable impurities.
(c) A retained austenite amount of the surface layer part of the rolling surface is 5% or less by volume.

EP 2 025 765 A1 discloses a rolling apparatus including an external member having a raceway surface on an inner peripheral surface thereof, an internal member having a raceway surface on an outer peripheral surface thereof, and a plurality of rolling elements which are rotatably provided between the raceway surface of the external member and the . raceway surface of the internal member. A surface of at least one of the internal member, the external member, and the rolling elements is subjected to carbonitriding or nitriding; an area percentage of a nitride containing Si and Mn is 1% or more and 20% or less; surface hardness is HV750 or more. When depth from the raceway surface or depth from a rolling surface of the rolling element is defined as Z and diameter of the rolling element is defined as d, hardness at Z=0.045d is HV650 to 850, and hardness at Z=0.18d is HV400 to 800.

SUMMARY OF THE INVENTION

PROBLEMS TO BE SOLVED BY THE INVENTION

The rolling bearing described in Patent Documents 1 and 2 has room for improvement in an increase in burning resistance performance of the rolling bearing for the machine tool.

Also, metal contact tends to occur on the rolling contact surface since the rolling bearing for the machine tool is used on condition that the PV value is high and the oil film is thin as described above. Then, when the metal contact occurs on the rolling contact surface, wear, adhesion, transfer of indentations, etc. may occur on a rolling surface of a rolling element and raceway surfaces of inner and outer rings, and a strip-shaped travel mark may be left under severe conditions. Inside the travel mark, surface roughness becomes rougher than the beginning.

That is, in the rolling bearing for the machine tool, deterioration in the surface roughness may occur on the rolling surface of the rolling element and the raceway surfaces of the inner and outer rings. The metal contact tends to occur more due to a decrease in an oil film parameter A value (oil film thickness to surface roughness) with such deterioration in the surface roughness. Also, due to progress of the deterioration in the surface roughness, burning tends to occur and a life decreases and vibration increases.

Further, since the rolling bearing for the main spindle of the machine tool is used on rotation condition that the Dmn value is 800000 or more as described above, the rolling bearing is used under condition that a surface pressure P is relatively low and a slip speed V is very high (for example, 0.080 m/s or more, 0.100 m/s or more) when a PV value is equal as compared with rolling bearings for other industrial machines (for example, railroad vehicles, industrial vehicles, construction machines, pumps or turbines).

When the rolling bearing is used on condition that the Dmn value is high and the slip speed V is high, stiff shear resistance on the rolling contact surface locally increases the temperature of lubricating oil and decreases viscosity of the lubricating oil. Since the oil film becomes thin accordingly, the oil film parameter A value becomes smaller. As a result, in the rolling bearing for the main spindle of the machine tool, the metal contact or the burning tends to occur more as compared with the rolling bearings for other industrial machines in which the PV value is equal.

On the other hand, in a machine tool having an ATC (automatic tool changer), a very large axial load is applied to a rolling bearing for supporting a main spindle at the time of unclamping, with the result that a rolling surface of a rolling element and a raceway surface of a bearing ring constructing the rolling bearing require high indentation resistance.

Also, a machine tool with complicated operation such as a five-axis working machine has a problem of causing an unexpected collision in the top of a main spindle including a tool, and with such a collision, indentations may occur in a rolling surface of a rolling element and a raceway surface of a bearing ring constructing the rolling bearing for supporting the main spindle. When the indentations occur in the rolling surface of the rolling element and the raceway surface of the bearing ring, vibration occurs in the rolling bearing or acoustic characteristics of the rolling bearing decrease and machining performance by the machine tool may decrease.

A problem of this invention is to provide a use of a rolling bearing for a machine tool with better burning resistance performance than that of a conventional rolling bearing.

## MEANS FOR SOLVING THE PROBLEMS

In order to solve the problem described above, the invention provides a use of a roller bearing according to independent claim 1. One aspect of the present disclosure is a rolling bearing having an inner ring, an outer ring and a rolling element, in which a use condition satisfies the following configuration (1) and (6) and is characterized in that retained austenite amounts ($\gamma_{RAB}$) of surface layer parts of the inner ring and the outer ring are more than 0% by volume and the rolling element has the following configurations (2) to (5) and (7).

(1) The rolling bearing is lubricated with lubricating oil whose kinematic viscosity at 40°C is 1 to $5 \times 10^{-5} m^2/s$ (10 to 50 cSt) or grease whose kinematic viscosity of base oil at 40°C is 1 to $5 \times 10^{-5} m^2/s$ (10 to 50 cSt) and is used on rotation condition that a PV value of rolling contact between a raceway surface of the inner ring or the outer ring and a rolling surface of the rolling element is 100 MPa•m/s or more and a Dmn value is 800000 mm·min$^{-1}$ or more.

(2) The rolling element is obtained by processing a raw material including alloy steel in which an Si content is 0.3 to 2.2% (both inclusive) by weight and an Mn content is 0.3 to 2.0% (both inclusive) by weight and also a content ratio (Si/Mn) of Si to Mn is 5 or less by mass in a predetermined shape and then performing thermal treatment including carbonitriding or nitriding. The Si improves quenching properties and also enhances martensite, but in order to obtain an effect of increasing a life and ensure burning resistance on a rolling contact surface (under conditions of high PV and high V), the Si content is set at 0.3% or more by weight. However, the Si content is set at 2.2% or less by weight since machinability is decreased and a failure risk caused by a shock load due to a program error etc. is increased by a decrease in toughness when the Si content is too high. Also, the Mn content is set at 0.3% or more by weight in order to efficiently precipitate Si•Mn nitride. However, the Mn content is set at 2.0% or less by weight since hardness, shock resistance and indentation resistance are decreased due to the too large retained austenite amounts of the surface layer parts after the thermal treatment when the Mn content is too high. Further, the ratio (Si/Mn) is set at 5 or less since it becomes difficult to promote precipitation of the Si•Mn nitride even in the case of sufficiently diffusing nitrogen when the Mn content is low to the Si content.

(3) The Si•Mn nitride including nitride of silicon (Si) and nitride of manganese (Mn) is present in the rolling surface in a range of 1.0 to 20.0% (both inclusive) by area. The Si•Mn nitride has functions of improving wear resistance or indentation resistance and also improving a rolling fatigue life, and the area ratio of the Si•Mn nitride is set at 1.0% or more in order to effectively obtain the functions. However, the area ratio is set at 20% or less since strength or toughness necessary for a rolling member cannot be obtained when the Si•Mn nitride is too large.

(4) An N content of a surface layer part (range from a surface to a depth of 50 $\mu$m) of the rolling surface is 0.2 to 2.0% (both inclusive) by weight. Nitrogen present in the surface layer part has functions of enhancing solution of martensite and ensuring stability of retained austenite and decreasing a tangential force acting on the rolling surface by forming nitride or carbonitride and improving wear resistance and indentation resistance, and the N content of a surface layer part is set at 0.2% or more by weight in order to effectively obtain such functions. However, the N content is set at 2.0% or less by weight since strength or toughness necessary for the rolling member cannot be obtained when the N content is too high.

(5) A retained austenite amount ($\gamma_{RC}$) of the surface layer part (range from a surface to a depth of 50 $\mu$m) of the rolling surface is 0 (exclusive) to 30% (inclusive) by volume and the following formula (1) is satisfied.

$$\gamma_{RAB}-15 \leq \gamma_{RC} \leq \gamma_{RAB}+15 \ldots (1)$$

In the rolling bearing used on the condition shown in the above configuration (1), metal contact tends to occur on a rolling contact surface (a surface of contact between the raceway surface of the inner ring or the outer ring and the rolling surface of the rolling element) as described above, but the rolling element has the above configurations (2) to (5) to thereby improve wear resistance and indentation resistance of the rolling element. As a result, the strip-shaped travel mark as described above becomes resistant to being formed on the raceway surface of the inner ring or the outer ring and the rolling surface of the rolling element, and deterioration in surface roughness is reduced and therefore, burning resistance performance of the rolling bearing is improved.

The rolling bearing for a main spindle of a machine tool is used on condition that the above configuration (1) and the following configuration (6) are satisfied. Even in the case of being used on condition that the above configuration (1) and the following configuration (6) are satisfied, the rolling bearing of this aspect can obtain good burning resistance performance.

(6) A slip speed V of rolling contact between a raceway surface of the inner ring or the outer ring and a rolling surface of the rolling element is 0.080 m/s or more.

The rolling bearing of this aspect has the following configuration (7), and preferably has the following configuration (8).

(7) The retained austenite amounts ($\gamma_{RAB}$) of the surface layer parts of the inner ring and the outer ring and the retained austenite amount ($\gamma_{RC}$) of the surface layer part of the rolling surface of the rolling element are 0 (exclusive) to 30% (inclusive) by volume.

(8) The retained austenite amounts ($\gamma_{RAB}$) of the surface layer parts of the inner ring and the outer ring and the retained austenite amount ($\gamma_{RC}$) of the surface layer part of the rolling surface of the rolling element are 0 (exclusive) to 20% (inclusive) by volume.

As the retained austenite amount is larger, indentations tend to occur on the rolling surface of the rolling element and the raceway surface of the bearing ring constructing the rolling bearing, and burning resistance and wear resistance are decreased.

Since the rolling bearing of this aspect has the above configuration (7) (more preferably has the above configuration (8)) to thereby improve indentation resistance of the rolling surface of the rolling element and the raceway surface of the bearing ring constructing the rolling bearing, the rolling bearing can also be suitably used as applications for supporting a main spindle of a machine tool such as a five-axis working machine or a machine tool having an ATC (automatic tool changer).

Also, since the rolling bearing of this aspect has the above configuration (7) (more preferably has the above configuration (8)) to thereby improve burning resistance and wear resistance of the rolling bearing, the rolling bearing can be suitably used as applications (for the main spindle of the machine tool) of the condition that the above configuration (1) and the above configuration (6) are satisfied.

ADVANTAGE OF THE INVENTION

This invention provides the use of the machine tool with the rolling bearing with better burning resistance performance than that of a conventional rolling bearing.

BRIEF DESCRIPTION OF THE DRAWINGS

Fig. 1 is a sectional view showing an angular ball bearing corresponding to one embodiment of this invention.
Fig. 2 is a schematic configuration diagram showing a tester for evaluating burning resistance performance used in the embodiment.
Fig. 3 is a graph showing a relation between a life and a cumulative failure probability obtained from results of test performed in the embodiment.
Fig. 4 is a schematic configuration diagram showing a tester used in the embodiment in order to measure a limit PV value and torque.

Fig. 5 is a graph showing a relation between a limit PV value and a cumulative failure probability obtained from results of test performed in the embodiment.

Fig. 6 is a graph showing a relation between torque and a rotational speed obtained from results of test performed in the embodiment.

MODES FOR CARRYING OUT THE INVENTION

An embodiment of the rolling bearing used in this invention will hereinafter be described.

[Test to examine burning resistance performance]

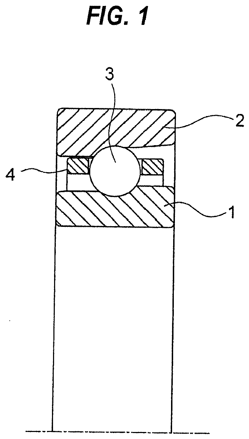

An angular ball bearing having a shape shown in Fig. 1 and corresponding to a model number "50BNR10ST" of NSK Ltd. was manufactured as a test bearing for examining burning resistance performance. This ball bearing includes an inner ring 1, an outer ring 2, a ball (rolling element) 3, and a cage 4.

The inner ring 1 and the outer ring 2 were obtained by performing a normal processing method and a thermal treatment method using a raw material made of SUJ2. The ball 3 of Comparative Example was obtained by performing processing by a normal method and thermal treatment by the following condition I using a raw material made of SUJ2. The ball 3 of Example was obtained by performing processing by a normal method and thermal treatment by the following condition II using the following raw material A.

<Raw material A>

Composition of alloy steel forming a raw material A: a C content of 1.01% by weight, a Cr content of 1.10% by weight, an Si content of 0.56% by weight, an Mn content of 1.10% by weight, a ratio of the Si content to the Mn content (Si/Mn) = 0.51, and residues having Fe and inevitable impurities

<Thermal treatment I: quenching and tempering>

After the raw material is held in an atmosphere of Rx gas for a predetermined time, the raw material is quenched with oil and is tempered and then is cooled by air.

<Thermal treatment II: carbonitriding → quenching and tempering>

After performing carbonitriding treatment for holding the raw material in an atmosphere of Rx gas plus propane gas plus ammonia gas for a predetermined time, the raw material is quenched with oil and is tempered and then is cooled by air.

As a result of measuring retained austenite amounts ($\gamma_{RAB}$) of surface layer parts of the inner ring 1 and the outer ring 2, the retained austenite amounts were 5.1% by volume.

As a result of measuring Si•Mn nitride including nitride of silicon (Si) and nitride of manganese (Mn) present in a surface (rolling surface) of the ball 3 of Example obtained, a presence ratio of the Si•Mn nitride was 2% by area. As a result of measuring an N content present in a surface layer part of the ball 3 of Example obtained, the N content was 0.5% by weight.

As a result of measuring a retained austenite amount ($\gamma_{RC}$) of the surface layer part of the ball 3 of Example obtained, the retained austenite amount was 10% by volume. In the ball 3 of Example, a relation between the retained austenite amount ($\gamma_{RC}$) of the surface layer part of the ball 3 and the retained austenite amounts ($\gamma_{RAB}$) of the surface layer parts of the inner ring 1 and the outer ring 2 satisfied a formula (1).

As a result of measuring Si•Mn nitride including nitride of silicon (Si) and nitride of manganese (Mn) present in a surface (rolling surface) of the ball 3 of Comparative Example obtained, a presence ratio of the Si•Mn nitride was 0.5% by area. As a result of measuring an N content present in a surface layer part of the ball 3 of Comparative Example obtained, the N content was 0.1% by weight.

As a result of measuring a retained austenite amount ($\gamma_{RC}$) of the surface layer part of the ball 3 of Comparative Example obtained, the retained austenite amount was 10% by volume.

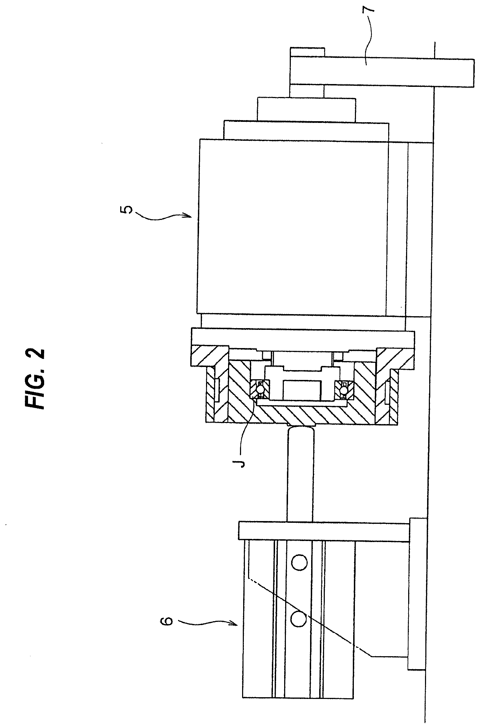

An angular ball bearing of Example assembled using the ball 3 of Example and an angular ball bearing of Comparative Example assembled using the ball 3 of Comparative Example were attached as a test bearing J of a tester for evaluating burning resistance performance shown in Fig. 2 and were rotated on the following condition, and the time (life) taken to cause burning in the bearing was examined.

The tester of Fig. 2 has a driving spindle device 5, an air cylinder device 6 for applying an axial load to the test bearing J, and a driving belt 7 for applying a rotating force to a spindle of the driving spindle device 5.

<Test condition>

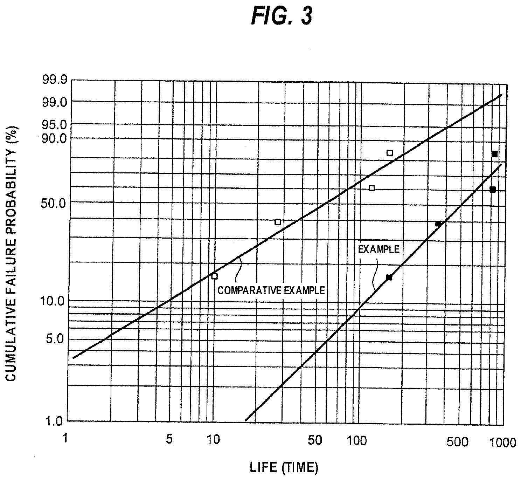

Lubricant: grease containing a thickener including barium complex soap and base oil whose kinematic viscosity at 40°C is $2.3 \times 10^{-5} m^2/s$ (23 cSt)
Rotational speed: 18000 min$^{-1}$ (Dmn value: 1150000, PV value: 500 MPa•m/s)
Axial load: 1400 N
Test results are shown in a graph of Fig. 3.

Also, an L50 life of the angular ball bearing of Example was 485.0 hours, and an L50 life of the angular ball bearing of Comparative Example was 55.3 hours. That is, burning resistance performance of the angular ball bearing of Example was 8.8 times that of the angular ball bearing of Comparative Example, and this angular ball bearing of Example was good in the burning resistance performance.

[Test to examine torque]

An angular ball bearing (an inside diameter of 50 mm, an outside diameter of 80 mm, a width of 16 mm, and a ball diameter of 6.35 mm) having a shape shown in Fig. 1 and corresponding to a model number "50BNR10ST" of NSK Ltd. was manufactured as a test bearing for torque test. This ball bearing includes an inner ring 1, an outer ring 2, a ball (rolling element) 3, and a cage 4.

The inner ring 1 and the outer ring 2 were obtained by performing a normal processing method and a thermal treatment method using a raw material made of SUJ2. The ball 3 of Comparative Example was obtained by performing processing by a normal method and thermal treatment by the condition I described above using a raw material made of SUJ2. The ball 3 of Example was obtained by performing processing by a normal method and thermal treatment by the condition II described above using the raw material A described above.

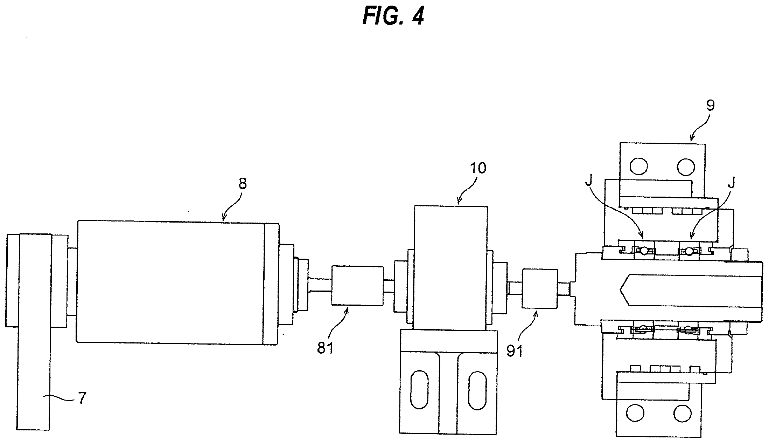

An angular ball bearing of Example assembled using the ball 3 of Example and an angular ball bearing of Comparative Example assembled using the ball 3 of Comparative Example were attached as a test bearing J of a tester shown in Fig. 4 and were rotated on the following condition, and a limit PV value was examined.

The tester of Fig. 4 has a support spindle 8, a test spindle 9, a torque meter 10 arranged between these spindles 8 and 9, and a driving belt 7 for applying a rotating force to the support spindle 8. The support spindle 8 and the test spindle 9 are coupled to the torque meter 10 by couplings 81, 91. Dynamic torque at the time of rotation of the test spindle 9 is detected by the torque meter 10.

<Test condition>

Lubricant: grease containing a thickener including barium complex soap and base oil whose kinematic viscosity at 40°C is $2.3 \times 10^{-5}$ m$^2$/s (23 cSt)

Rotational speed: 8000 min$^{-1}$

Previous pressure method: fixed-position previous pressure of DB combination

Previous pressure load at the time of assembly: 1180 N

During test, an external pipe of the test spindle 9 is cooled by oil, and torque (a torque value detected by the torque meter 10) and an outer ring temperature of the test bearing J are measured. A rotational speed of the test spindle 9 is increased by 1000 min$^{-1}$ every 20 hours and constant-speed rotation is performed and during the constant-speed rotation, it is examined whether a big change such as wobble occurs in the test bearing J, and the product (PV value) of a surface pressure (P) and a rotational speed (V) at a point in time of the occurrence is set at a limit PV value.

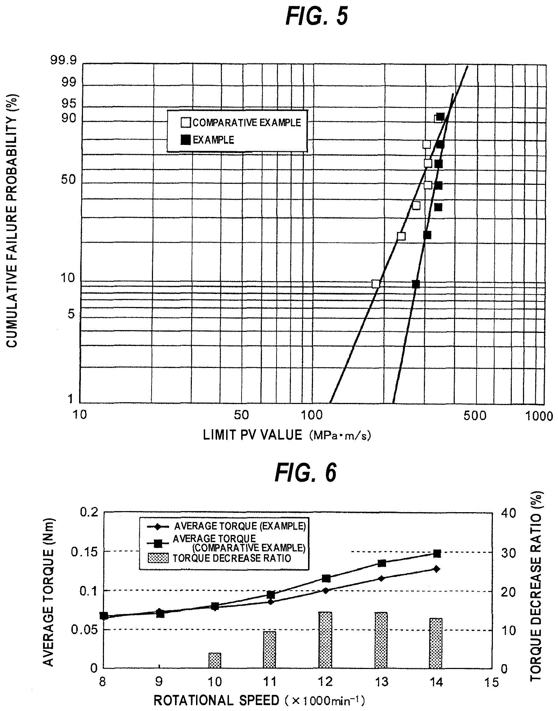

In the bearings of Example and Comparative Example, the same test bearings J were prepared by seven sets and each of the tests was performed seven times. The results are shown in Fig. 5 by a graph plotted in a Weibull chart. The average values of the limit PV values were 330 Pa·m/s in the bearings of Example and 280 Pa·m/s in the bearings of Comparative Example. Also, it is apparent from the graph of Fig. 5 that the limit PV value having 90% reliability of the bearing of Example is about 280 Pa·m/s and the limit PV value having 90% reliability of the bearing of Comparative Example is about 190 Pa·m/s and the limit PV value having 99% reliability of the bearing of Comparative Example is about 110 Pa·m/s.

That is, according to the bearing of Example, the limit PV value having 90% reliability can be increased by 40% or more (about 47%) of the limit PV value of the bearing of Comparative Example. Also, in the case of considering a safety factor, an effect by the bearing of Example can probably be exerted when the PV value is 100 Pa·m/s or more.

Also, a relation between the average torque in each of the seven-time tests and the rotational speed of constant-speed rotation in this test is shown by a graph in Fig. 6. This graph together shows a torque decrease ratio of the average torque of the bearing of Example to the average torque of the bearing of Comparative Example. As is evident from the graph of Fig. 6, when the rotational speed is 11000 min$^{-1}$ (Dmn value is 700000) or more, the torque of the bearing of Example is lower than that of the bearing of Comparative Example, and particularly when the rotational speed is 12000 min$^{-1}$ (Dmn value is 770000) or more, the torque decrease ratio becomes 13% or more.

Thus, the bearing of Example can reduce an increase in torque in the case of being used on condition that the PV value is high. This is probably because deterioration (a strip-shaped travel mark etc.) becomes resistant to occurring on a surface of the ball and the raceway surfaces of the inner and outer rings by improving wear resistance of the ball.

In addition, this embodiment has been described by taking the angular ball bearing as an example, but this invention can also be applied to rolling bearings other than the angular ball bearing, for example, a single-row cylindrical roller bearing or a double-row cylindrical roller bearing.

The present application is based on Japanese patent application (patent application No. 2012-100027) filed on April 25, 2012, Japanese patent application (patent application No. 2012-233165) filed on October 22, 2012 and Japanese patent application (patent application No. 2013-80642) filed on April 8, 2013.

INDUSTRIAL APPLICABILITY

The invention can use the rolling bearing on condition that a Dmn value is 800000 or more with better burning resistance performance than that of a conventional rolling bearing.

## DESCRIPTION OF REFERENCE NUMERALS AND SIGNS

| 1  | INNER RING            |
|----|-----------------------|
| 2  | OUTER RING            |
| 3  | BALL (ROLLING ELEMENT)|
| 4  | CAGE                  |
| 5  | DRIVING SPINDLE DEVICE|
| 6  | AIR CYLINDER DEVICE   |
| 7  | DRIVING BELT          |
| 8  | SUPPORT SPINDLE       |
| 81 | COUPLING              |
| 9  | TEST SPINDLE          |
| 91 | COUPLING              |
| 10 | TORQUE METER          |
| J  | TEST BEARING          |

## Claims

1. A use of a rolling bearing, the rolling bearing comprising: an inner ring; an outer ring; and a rolling element, wherein:

   retained austenite amounts $\gamma_{RAB}$ of surface layer parts of the inner ring and the outer ring is greater than 0% and less than or equal to 30%, by volume;

   the rolling element is made of a raw material including alloy steel in which an Si content is 0.3 to 2.2%, both inclusive, by weight and an Mn content is 0.3 to 2.0%, both inclusive, by weight and also a content ratio, Si/Mn, of Si to Mn is 5 or less by mass;

   the rolling element has a predetermined shape and has been thermally treated including carbonitriding or nitriding;

   Si•Mn nitride including nitride of silicon Si and nitride of manganese Mn is present in a rolling surface of the rolling element in a range of 1.0 to 20.0%, both inclusive, by area;

   an N content of a surface layer part of the rolling surface is 0.2 to 2.0%, both inclusive, by weight; and

   a retained austenite amount $\gamma_{RC}$ of the surface layer part of the rolling surface is greater than 0% and less than or equal to 30%, by volume and the following formula (1) is satisfied

   $$\gamma_{RAB}-15 \le \gamma_{RC} \le \gamma_{RAB}+15 \ldots (1)$$

**characterized in that** the rolling bearing is lubricated with lubricating oil whose kinematic viscosity at 40°C is 1 to $5\times10^{-5}m^2$/s or grease whose kinematic viscosity of base oil at 40°C is 1 to $5\times10^{-5}m^2$/s, and

the rolling bearing is on rotation condition that a PV value of a rolling contact between a raceway surface of the inner ring or the outer ring and the rolling surface is 100 MPa•m/s or more, a slip speed V of the rolling contact is 0.080 m/s or more, and a Dmn value is 800000 mm•min$^{-1}$ or more, wherein the PV value is defined by the product of a surface pressure of the rolling contact and the slip speed V, and the Dmn value is defined by the product of an average dimension of an inside diameter and an outside diameter of the bearing multiplied by a rotational speed.

## Patentansprüche

1. Verwenden eines Wälzlagers, wobei das Wälzlager umfasst: einen Innenring; einen Außenring; und ein Wälzelement, wobei:

   Restaustenitmengen $\gamma_{RAB}$ von Oberflächenschichtteilen des Innenrings und des Außenrings größer sind als 0 % und kleiner gleich 30 % im Volumen;

   das Wälzelement aus einem Rohmaterial umfassend Legierungsstahl, in dem ein Si-Gehalt 0,3 bis 2,2 %, jeweils einschließlich, im Gewicht beträgt und ein Mn-Gehalt 0,3 bis 2,0 %, jeweils einschließlich, im Gewicht beträgt und ebenfalls ein Gehaltsverhältnis Si/Mn von Si zu Mn 5 oder weniger in der Masse beträgt, besteht;

   das Wälzelement eine vorgegebene Form aufweist und einer Wärmebehandlung umfassend Carbonitrierung oder Nitrierung unterzogen wurde;

   Si*Mn-Nitrid umfassend Nitrid von Silicium (Si) und Nitrid von Mangan (Mn) in einer Wälzfläche des Wälzelements in einem Bereich von 1,0 bis 20,0 %, jeweils einschließlich, in der Fläche vorhanden ist;

   ein N-Gehalt eines Oberflächenschichtteils der Wälzfläche 0,2 bis 2,0 %, jeweils einschließlich, im Gewicht beträgt; und

   eine Restaustenitmenge $\gamma_{RAB}$ des Oberflächenschichtteils der Wälzfläche größer ist als 0 % und kleiner gleich 30 %, im Volumen, und die folgende Formel (1) erfüllt ist:

   $$\gamma_{RAB}-15 \le \gamma_{RC} \le \gamma_{RAB}+15 \ (1)$$

**dadurch gekennzeichnet, dass** das Wälzlager mit Schmieröl, dessen kinematische Viskosität bei 40 °C 1 bis $5\times10^{-5}$ m²/s beträgt, oder Fett, dessen kinematische Viskosität des Grundöls bei 40 °C 1 bis $5\times10^{-5}$ m²/s beträgt, geschmiert wird, und das Wälzlager einer Drehbedingung unterliegt, dass ein PV-Wert eines Wälzkontakts zwischen einer Rollbahnfläche des Innenrings oder des Außenrings 100 MPa•m/s oder mehr beträgt, eine Schlupfdrehzahl V des Wälzkontakts 0,080 m/s oder mehr beträgt und ein Dmn-Wert 800000 mm•min$^{-1}$ oder mehr beträgt, wobei der PV-Wert durch das Produkt eines Flächendrucks des Wälzkontakts und der Schlupfdrehzahl V definiert ist und der Dmn-Wert durch das Produkt eines Durchschnittsmaßes eines Innendurchmessers und eines Außendurchmessers des Lagers multipliziert mit einer Drehzahl definiert ist.

## Revendications

1. Utilisation d'un palier à roulement, le palier à roulement comprenant : une bague intérieure ; une bague extérieure ; et un élément de roulement, dans lequel :

   des quantités d'austénite retenue $\gamma_{RAB}$ de parties de couche superficielle de la bague intérieure et de la bague extérieure sont supérieures à 0 % et inférieures ou égales à 30 %, en volume ; l'élément de roulement est constitué d'une matière première comprenant de l'acier allié dans lequel une teneur en Si est de 0,3 à 2,2 %, tous deux inclus, en poids et une teneur en Mn est de 0,3 à 2,0 %, tous deux inclus, en poids et également un rapport de teneur, Si/Mn, entre Si et Mn est de 5 ou moins en masse ; l'élément de roulement a une forme prédéterminée et a été traité thermiquement incluant une carbonitruration ou nitruration ; du nitrure de Si•Mn comprenant du nitrure de silicium Si et du nitrure de manganèse Mn est présent dans une surface de roulement de l'élément de roulement dans une plage de 1,0 à 20,0 %, tous deux inclus, par zone ; une teneur en N d'une partie de couche superficielle de la surface de roulement est de 0,2 à 2,0 %, tous deux inclus, en poids ; et une quantité d'austénite retenue $\gamma_{RC}$ de la partie de couche superficielle de la surface roulante est supérieure à 0 % et inférieure ou égale à 30 %, en volume et la formule (1) suivante est satisfaite

$$\gamma_{RAB}-15\leq\gamma_{RC}\leq\gamma_{RAB}+15 \ldots (1)$$

**caractérisée en ce que**

le palier à roulement est lubrifié à l'aide d'une huile lubrifiante dont la viscosité cinématique à 40°C est de 1 à $5\times10^{-5}$m²/s ou d'une graisse dont la viscosité cinématique de l'huile de base à 40°C est de 1 à $5\times10^{-5}$ m²/s, et le palier à roulement est en condition de rotation telle qu'une valeur PV d'un contact de roulement entre une surface de chemin de roulement de la bague intérieure ou de la bague extérieure et la surface de roulement est de 100 MPa•m/s ou plus, une vitesse de glissement V du contact de roulement est de 0,080 m/s ou plus, et une valeur Dmn est de 800 000 mm•min$^{-1}$ ou plus, la valeur PV étant définie par le produit d'une pression superficielle du contact de roulement et la vitesse de glissement V, et la valeur Dmn est définie par le produit d'une dimension moyenne d'un diamètre intérieur et d'un diamètre extérieur du palier multipliée par une vitesse de rotation.

FIG. 1

FIG. 2

## FIG. 3

FIG. 4

## FIG. 5

CUMULATIVE FAILURE PROBABILITY (%)

☐ COMPARATIVE EXAMPLE
■ EXAMPLE

LIMIT PV VALUE (MPa·m/s)

## FIG. 6

AVERAGE TORQUE (Nm)

TORQUE DECREASE RATIO (%)

◆ AVERAGE TORQUE (EXAMPLE)
■ AVERAGE TORQUE (COMPARATIVE EXAMPLE)
▨ TORQUE DECREASE RATIO

ROTATIONAL SPEED (×1000min⁻¹)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007192330 A
- JP 2004353742 A
- EP 2025765 A1

- JP 2012100027 A
- JP 2012233165 A
- JP 2013080642 A